Europäisches Patentamt

European Patent Office

Office européen des brevets

(11) Publication number: **0 223 031**
**A2**

## (12) EUROPEAN PATENT APPLICATION

(21) Application number: 86113660.4

(51) Int. Cl.⁴: **G06F 1/04**

(22) Date of filing: 03.10.86

(30) Priority: 18.11.85 US 799047

(43) Date of publication of application:
**27.05.87 Bulletin 87/22**

(84) Designated Contracting States:
**DE FR GB IT**

(71) Applicant: International Business Machines
Corporation
Old Orchard Road
Armonk, N.Y. 10504(US)

(72) Inventor: Aghili, Houtan
6435 Berwickshire Way
San Jose California 95120(US)
Inventor: Cristian, Flavin Ilie
2209 McLaughlin Avenue, Apt 3
San Jose California 95122(US)
Inventor: Strong, Hovey Raymond
975 Marlington Court
San Jose California 95120(US)

(74) Representative: Grant, Iain Murray
IBM United Kingdom Limited Intellectual
Property Department Hursley Park
Winchester Hampshire SO21 2JN(GB)

(54) Clock synchronisation in a distributed processing system.

(57) The present invention provides a method for clock synchronisation in a distributed processing system comprising the steps of.

-diffusing from a processor with a preferred clock value (for instance, a processor having a fastest correct clock) a synch signal indicating the preferred clock value to the other processors in the system; and

-adjusting at the other processors in the system the local clocks in response to the synch signal such that the difference between the local clock values for each pair of processors in the system is bounded.

# CLOCK SYNCHRONISATION IN A DISTRIBUTED PROCESSING SYSTEM

This invention relates to a method for synchronising clocks in a set of processors interconnected in a distributed system and to a system which operates in accordance with said method.

Consider a set of processors interconnected in a distributed system to perform certain distributed computations, where each processor is equipped with a hardware clock. If one wants to measure the time elapsed between the occurrences of two events e and e' in a computation local to a single processor p, one can essentially instantaneously read the values of the local hardware clock register in the processor p when the events e and e' occur and compute the difference between these values.

A different method must be devised if the intention is to measure the time elapsed between two events of a distributed computation. For instance, if an event $e_p$ occurs on a processor p and another event $e_q$ occurs on a different processor q, it is practically impossible for q to instantaneously read its hardware clock when the remote event $e_p$ occurs. Indeed, the sending of a message from p to q that notifies the occurrence of $e_p$ entails a random transmission delay that makes it impossible for q to exactly know the value displayed by q's hardware clock at the instant when $e_p$ occurred in p. Hence, q (and by a similar argument p) cannot compute exactly the time elapsed between $e_p$ and $e_q$ by relying only on their own clocks.

The problem of measuring the time elapsed between occurrences of distributed events would be easily solved if the processor clocks could be exactly synchronised. That is, if at any instant of a postulated Newtonian time referential, all clocks would read the same value. It would then be sufficient for p to send the value of its local clock reading when $e_p$ occurs to q, and for q to subtract this from the value of its clock reading when $e_q$ occurs. Unfortunately, the uncertainty in message transmission delays inherent in distributed systems makes exact clock synchronisation impossible.

The prior art has accomplished approximate clock synchronisation in a distributed system by causing each processor, having a clock to be synchronised, to gather information from other processors in the system and based on gathered information to generate a preferred local clock value. This system is most often based on an averaging algorithm that generates the average value of all the clocks in the system. To continually cause each processor in the system to adjust its clock to an individually generated average requires a great deal of communication among processors and complicated algorithms to provide fault tolerance.

U. S. Patent 4,531,185, invented by Halpern et al and assigned to the present applicants, issued July 23, 1985, entitled "Centralised Synchronisation of Clocks", describes a method for clock synchronisation in a distributed computing system in the presence of faults which uses exchange of information. The method steps taught by Halpern et al include (a) forming an ordered list of node identities and replicating the list at each node; (b) broadcasting a time value with its unforgeable signature to all nodes including itself by the first node on the list; and (c) multiple message exchanging of the time value among the nodes under a protocol wherein: (1) each node accepts the time value as valid and sets its clock forward if the time value is received within an interval predetermined as a function of the number of signatures, (2) otherwise repeating steps (b) and (c) as modified by broadcasting another time value from the next listed node in order. The Halpern et al patent provides a discussion of the prior art and is incorporated by reference for that purpose. A continuation-in-part of the Halpern et al patent, Serial No. 06/560,082 (US -A-4,584,643), filed December 9, 1983, also assigned to the present applicants, is likewise incorporated by reference.

The Halpern et al inventions are relatively complicated algorithms that suffer the limitations that they require a great deal of communication among processors in the system and do not provide for efficient join of additional processors.

The Halpern et al invention does provide fault tolerance which is recognised as an important attribute of clock synchronisation systems. Thus one of the main objectives of a system for providing clock synchronisations in a distributed processing system is that the method must be practical in the face of faults which are reasonably likely to occur in distributed processing systems.

The following discussion of faults is useful to an understanding of the present invention. For the purposes of fault classification, denote P the set of processors of a distributed system and L the set of communication links between the processors in P. Processors and links undergo certain state transitions in response to service requests. For example, a link $(p,q)_{\epsilon}L$ that joins processor $p_{\epsilon}P$ to processor $q_{\epsilon}P$ delivers a message to q if p so requests. Similarly, a processor p computes a given function if its user so requests.

System components, such as processors and communication links, are non-faulty if to any incoming service request they respond in a manner consistent with their specification. Service specifications prescribe the state transition that a component should undergo in response to a service request and the real time interval within which the transition should occur. A component failure occurs when a component does not deliver the service requested in the manner specified. The cause of a failure is a fault. Three general fault classes can be described as follows. (1) A fault that causes a component never to respond to a service request is termed an omission fault. (2) A fault that causes a component to deliver a requested service either too early or too late (i.e. outside the real time interval specified) is a timing fault. A timing fault that causes a late service delivery is termed a performance (or late timing) fault. A timing fault that leads to an earlier than specified service delivery is termed a race (or early timing) fault. (3) A fault that causes a component to deliver a service that is different from the one requested is termed a Byzantine fault.

Typical examples of omission faults are processor crashes, hardware clocks that stop running, link breakdowns, processors that occasionally do not relay messages they should, and links that sometimes lose messages. Occasional message delays caused by overloaded relaying processors, hardware clocks running at a speed lower than $(1+\delta)^{-1}$, where $\delta$ is the maximum drift from real time specified by the clock manufacturer, are examples of performance faults. A hardware clock that runs at a speed that exceeds $1+\delta$ is an example of a race fault. An example of Byzantine fault is an undetectable message corruption on a link because of electro-magnetic noise, or because of human sabotage.

The method according to the present invention for synchronising a plurality of local clocks in a distributed processor system comprises the steps of:

-diffusing from a processor with a preferred clock value (for instance, a processor having a fastest correct clock) a synch signal indicating the preferred clock value to the other processors in the system; and

-adjusting at the other processors in the system the local clocks in response to the synch signal such that the difference between the local clock values for each pair of processors in the system is bounded.

The processor with a preferred clock value could for instance be the processor having the fastest correct clock. A start signal indicating that synchronisation is desired can be generated to initiate the diffusing of the synch signal on the connection of additional processors to the system or at synchronisation intervals.

The present invention enables clock synchronisation to be performed in a distributed processing system in a manner that is tolerant of any number of omission faults (e.g. processor crashes, link crashes, occasional message losses) and performance faults (e.g. overloaded processors, slow links) that do not partition the communications network of the distributed processing system. Also, the present method enables an arbitrary number of simultaneous connections of additional processors to the system, termed processor joins, to be handled.

The invention will be further described hereinafter with reference to the accompanying drawings of which:

Fig. 1 is a table outlining steps for clock synchronisation;

Fig. 2 is a table outlining steps for implementing a discrete logical clock abstract data type for use with the protocol of Fig. 1; and

Fig. 3 is a table outlining steps for implementing a continuous logical clock abstract data type for use with the protocol of Fig. 1.

With reference to the figures, a detailed description of a preferred embodiment of the present invention is provided.

The present invention provides a method for maintaining approximately synchronised clocks in a distributed system. The protocol maintains on each correctly functioning processor p a logical clock $C_p$ which measures the passage of real time with an accuracy comparable to that of a hardware clock and which, at any instant t, displays a local clock time $C_p(t)$ that is within some known bound DMAX of the local clock times displayed by any other logical clock $C_q$ running on any correct system processor q. This relationship can be symbolically represented as follows:

for all t and all correct processors p & q: $|C_p(t)-C_q(t)| < DMAX$

Such logical clocks allow one to measure with an apriori known accuracy the time that elapses between events which occur on distinct processors.

A logical clock is maintained by periodically computing an adjustment function for a hardware clock. Two different solutions to the problem of implementing the logical clocks are described. The first solution uses a discrete adjustment function that is non-continuous, and hence requires in the preferred embodiment the maintenance of several logical clocks at each node in the system. The second solution uses an essentially continuous adjustment function that eliminates the need for maintaining multiple logical clocks.

Each processor in the distributed processing system includes a hardware clock which is used with the adjustment function discussed above to compute the logical clock according to the present invention. Typically, a hardware clock consists of an oscillator that generates a cyclic waveform at a uniform rate, and a counting register that records the number of cycles elapsed since the start of the clock. Preferably the hardware clocks of the processors that compose the system are driven by quartz crystal controlled oscillators that are highly stable and accurate. The use of this type of clocks is very common in the modern computer architectures like the IBM 4300 and 3080 series. Typically, a correct quartz clock may drift from real time at a rate of at most $10^{-6}$ seconds per second.

A hardware clock can fail by stopping, speeding up, or slowing down. If a detectable failure affects a hardware clock, any attempt at reading its value terminates with a clock-error exception in the preferred system as described in the IBM System/370: Principles of Operations, GA22-7000-8, 1981. For example, if the counting register that composes a clock is self-checking, the occurrence of a fault within it will generate (with a high probability) a clock-error signal. In many hardware architectures, an undetectable oscillator failure such as a sharp increase in oscillator frequency (e.g. because of a mechanical deformation of the quartz crystal) rapidly leads to a series of timing mismatches in interpreting processor instructions that soon result in a processor crash. Thus, as a practical matter, a clock synchronisation system need not address all possible kinds of clock faults. Rather, it is sufficient in many distributed systems if the clock synchronisation method operates in the presence of omission and performance faults, and of processor joins.

The characteristics of a typical distributed system can be illustrated as follows. Let HC(t) denote the value displayed by a hardware clock HC of of some processor at some real time t. (For the purpose of clarity, variables and constants that range over real time are shown in lower case, and the variables and constants ranging over clock time are shown in upper case.) Clocks can be characterised as follows in typical systems.

(A1) A correct hardware clock HC of a processor measures the passage of time between any two successive real time instants $t_1$ and $t_2$ correctly:
$$(1 + \delta)^{-1}(t_2 - t_1) < HC(t_2) - HC(t_1) < (1 + \delta)(t_2 - t_1)$$
Thus, correct clocks are within a linear envelope of real time (which runs by definition with speed 1). A hardware clock that is in a detectable erroneous state signals a clock-error exception whenever an attempt to read its value is made. It is likely that a clock error occurrence is detectable. The occurrence of clock errors is very unlikely.

From the hypothesis that correct clocks drift from real time by at most $\delta$, it is inferred that the rate at which two correct clocks can drift apart from each other during t real time units is at most dr.t,

where $dr = \delta(2 + \delta)/(1 + \delta)$. That is, dr (the relative clock drift rate) is a factor which when multiplied by a real time interval length gives the net amount by which hardware clocks could drift apart in the worst case during that time interval.

The next observation about typical distributed systems concerns the normal speed at which messages can be sent over non-faulty links between two processes running on adjacent non-faulty processors:
(A2) a message sent from a non-faulty processor p to a non-faulty processor q over a non-faulty link - (p,q) arrives at q and is processed in q in less than ldel (link delay) real time units.

If a message sent from p to a neighbour q needs more than ldel real time units to arrive at q, or never arrives, then at least one of the processors p,q or the link (p,q) is faulty.

The third observation states that, during clock synchronisation, any two non-faulty active processors in P are linked by at least one chain of non-faulty links and non-faulty intermediate processors. That is, as a practical matter
(A3) It is unlikely that a partition of the system of non-faulty processors and links will occur during clock synchronisation if there exist enough redundant links among the processors in the system.

Observations (A2,A3) allow us to conclude that, if a synchronisation message is sent by a non-faulty processor p to a non-faulty processor q over a chain of non-faulty links and intermediate processors, the message spends less than ndel = (N-1)-$^{x}$ldel (network delay) real time units between p and q, where N = |P| is the number of processors in the system.

The last observation concerns the classes of faults that are likely to occur in practice, and that the inventive method tolerates:
(A4) System components are most likely to be affected by (transient or permanent) omission and performance faults.

The clock synchronisation protocol according to the present invention ensures the following three properties in the preferred embodiment:
(C1) For any two non-faulty joined processors p,q$\epsilon$P, the logical clocks $C_p$ and $C_q$ indicating the current logical time should be synchronised within some apriori known bound DMAX (for maximum deviation):
for all t and any pair of correct processor p & q:
$$|C_p(t) - C_q(t)| < DMAX$$
(C2) The logical clocks of joined non-faulty processors should read values within a linear envelope of real time. That is, there should exist a constant $\beta$ such that for any clock $C_p$ and any real time t:
$$N + (1 + \beta)^{-1}t < C_p(t) < N' + (1 + \beta)t,$$
where N and N' are two constants which depend on the initial conditions of the clock synchronisation algorithm execution.

(C3) A correct processor that joins a set of synchronised processors, should have its clock synchronised within some apriori known real time jdel - (join delay). Also, in the absence of processor joins, it is required that periodic clock synchronisation terminate within some known real time sdel - (synchronisation delay).

The present method is based on the following consequence of observations (A2, A3, A4): If at real time t a correct processor $p \epsilon P$ diffuses a message containing its clock time T to all other processors, and any correct processor $q \epsilon P$ sets its clock to T upon receipt of the message from p, then the clocks of all correct processors will indicate times within ndel $^{x}$ $(1 + \delta)$ by real time t + ndel.

By diffusing a message, we mean the following process: processor p sends a new message on all outgoing links and any processor q that receives a new message on some link, relays it on all outgoing links excluding the link to the sending processor p. Diffusion of a synchronisation message is called a synch wave.

Although, immediately after a synch wave the logical clocks of all correct processors are within a known value $NDEL = ndel(1 + \delta)$, as time passes, clocks will naturally tend to drift apart. For instance, t real time units after the end of a synch wave, the correct clocks might be as far apart as $ndel(1 + \delta)$- + dr $^{x}$ t. If the intention is to keep the processor clocks close at all times, one has to periodically resynchronise the clocks. If PER is a period length (in clock time units), then in an interval PER between two successive synchronisation waves numbered s and s + 1, the clocks might drift as far apart as

$$D = ndel(1 + \delta) + dr(PER(1 + \delta) + ndel).$$

It will be the role of the (s + 1)th synchronisation wave to bring the clocks back again within $ndel(1 + \delta)$.

In the absence of processor crashes or joins, one could use a predefined synchroniser processor to generate synch waves. If processor crashes are possible, and they certainly are, then the existence of a unique synchroniser becomes a single point of failure. It is thus better to distribute the role of synchroniser among a set of more than one or all processors. In the preferred embodiment therefore, more than one or all processors are able to initiate a synch wave by generating a start signal if they discover that PER clock time units have elapsed since the last synchronisation occurred, or if they receive a start signal from a joining processor. If several synch waves are initiated by distinct processors with close clocks, then one of them will "win" and propagate to all processors of the system. If clocks are never to be set back, then one has to chose as the "winning" wave the wave generated by the processor with the fastest clock.

Synch waves will have to be generated also when new processors join a cluster of already synchronised processors in order to synchronise the new processors with the old processors. In such a case a joiner p will send a special "new" message (or join start signal) to all its neighbours, forcing them to initiate synch waves. The neighbours of these neighbours either propagate these waves, if their clocks are slower than the clocks of the wave initiators, or generate new synch waves, if their clocks are faster. After at most ndel real time units, a "winning" synch wave is generated in this way by some processor with the fastest clock. When this propagates to all the other processors, including the ones that are joining, they will all synchronise their clocks within $ndel(1 + \delta)$. Thus, within at most 2 $^{x}$ ndel real time units from the moment a join start signal is generated by a processor $p \epsilon P$, a winning synch wave is reflected back to p. At that moment, p is joined. That is, its clock is at most $ndel(1 + \delta)$ apart from the clocks of previously joined correct processors.

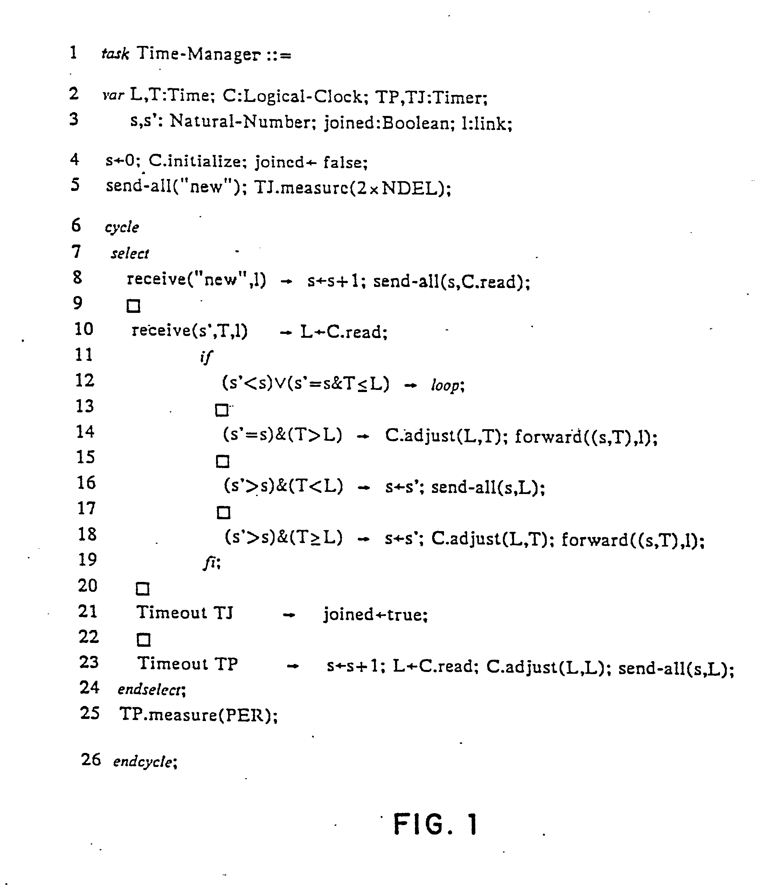

A detailed description of the clock synchronisation protocol "Time-Manager", (line 1), will now be given with reference to Fig. 1. This description is made in terms of two abstract data types: Logical-Clock and Timer. Instances C and TP of these data types can be declared as shown in line 2 of Fig. 1. TJ is also an instance of the Timer abstract data type.

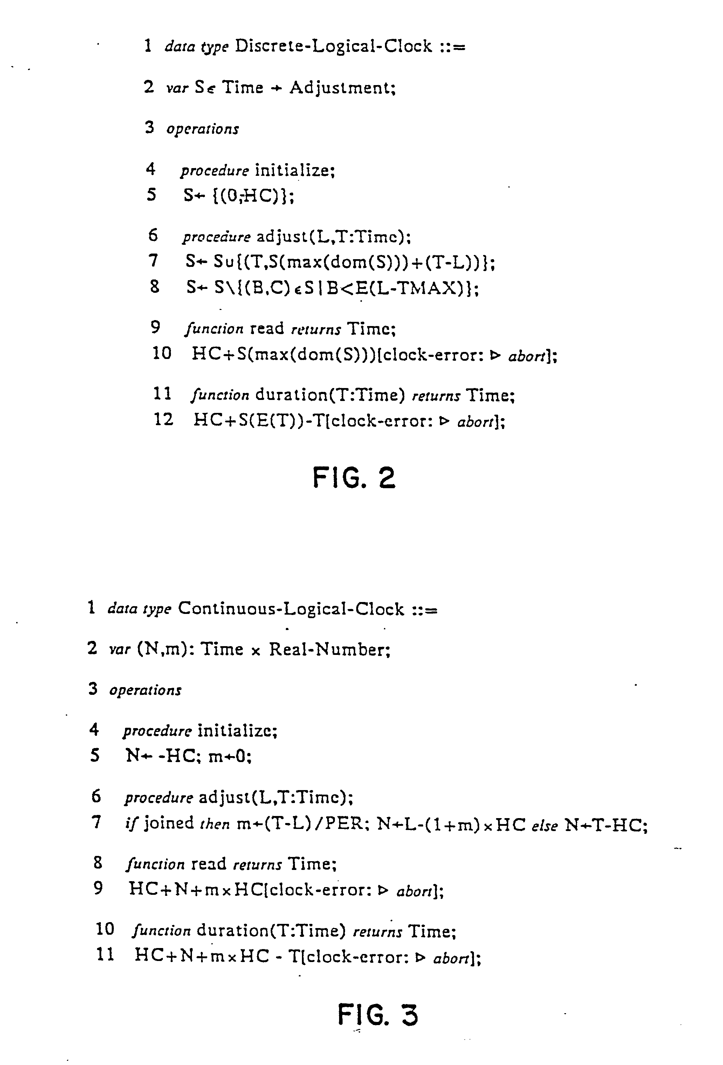

Users of an instance C of the local Logical-Clock data type can perform the following operations on it. The "initialise" operation (C.initialise, line 4) initialises the time displayed by C to 0. The operation "adjust(L,T:Time)" (C.adjust(L,T), e.g. line 14) adjusts the local clock value L currently displayed by C so that after PER time units C will show the same time as a logical clock which currently shows time T. The operation "read" (C.read, line 10) reads the current value displayed by C. The operation "duration(T:Time)" (line 11, Fig. 2; line 10, Fig. 3) returns the number of time units elapsed since a previous time T. Two different ways of implementing the Logical-Clock data type are described below with reference to Figs. 2 and 3.

The Timer data type has a unique operation "measure(T:Time)" (TP.measure(PER), line 25). If TP is a Timer instance, the meaning of invoking the operation TP.measure(T) is "ignore all previous TP.measure calls and signal a Timeout condition T clock time units from now." Thus, if after invoking TP.measure(100) at time 200, a new invocation is made at time 250, no Timeout condition occurs at time 300. If no other invocation of TP.measure is made between 250 and 349, then a Timeout condition occurs at time 350. We use two independent timers TP and TJ for convenience, although a single timer would be sufficient. The former is used to measure the maximum time interval which can elapse between periodic resynchronisations. The latter is used to time the join process.

The protocol Time-Manager also uses the variables L and T. Variable L is used to store the value of the local logical clock in response to the "C.read" operation (e.g. line 10). The variable T indicates the time value received in a synch signal.

Also the variables s and s' which are natural numbers are used to indicate the sequence number of the synch signal being operated on. The variable s is stored at each local processor and s' indicates the synch sequence number received in a synch signal from another processor. The variable "joined" is a Boolean true or false indicating whether a given processor is joined to the system such that its logical clock has been synchronised to the other processors in the system. The variable "l" is a variable identifying a communication link across which a synch wave is received or transmitted.

The protocol uses the following communication primitives: receive(m,l) that receives a message m on some link and returns the identity l of that link, forward(m,l) which sends a message m on all outgoing links excluding l, and send-all(m) that sends a message m on all outgoing links.

At processor start, a local synch wave sequence number s and the current local clock C are initialised to 0 (line 4). Then, a join phase that lasts for $2 \times NDEL$ time units begins with the sending of a special join start signal on all outgoing links (line 5). During the join phase, the "joined" Boolean variable is false (line 4); during the join phase, nothing can be said about how close the local clock is to other clocks of the network being joined. At the end of the join phase (line 21), "joined" becomes true and measurements of delays elapsed between distributed uted event occurrences can begin. The Timer TJ measures elapsed time from the occurrence of the join start signal to generate a timeout after 2xNDEL time units, at which time "joined" is set true (line 21).

The Time-manager can be awakened by three kinds of events: a join start signal that arrives from a neighbour that joins on a link l (line 8); a message belonging to a synch wave numbered s' announcing that the time is T and which arrives on a link l (line 10); and a timeout condition generated by the Timers TJ (as discussed above) and TP - (lines 21, 23).

The reception of a join start signal results in an attempt to generate a "winning" wave by sending a new sequence number $s = s + 1$ and local time $L = C.read$ on all lines (line 8).

Upon the reception of a synch signal having a sequence number s' and a time value T across a link l, the Time Manager sets the variable L to the value of the local logical clock (line 10). The Time Manager then performs one of four steps depending on the state of the received sequence number s', the state of the local sequence number s, and the value of the received clock T as compared to the value of the local logical clock L.

If the received sequence number s' is less than the local sequence number s, or if the received sequence number s' is equal to the local sequence number s and the received clock value is less than or equal to the local logical clock value, then the received synch signal is ignored and the system loops to wait for another start signal or synch signal or timeout condition (line 12).

If the received sequence number s' is equal to the local sequence number and the received time value T is greater than the local time value L, then the Time Manager adjusts the value of the local clock so that after PER time units it will read the same value as a logical clock which currently shows T and the sequence number and received clock value are forwarded on all outgoing links except the link from which the synch signal was received (line 14).

If the received sequence number s' is greater than the local sequence number s and the received clock value T is less than the local logical clock value L, then the local sequence number is set to the received sequence number s' and the sequence number and the value of the local clock L are sent on all outgoing links (line 16).

If the received sequence number s' is greater than the local sequence number s and the value of the clock T received in the synch signal is greater than or equal to the value of the local logical clock L, then the local sequence number s is set to the received sequence number s', the local logical clock C is set such that after PER time units its value will read the same value as a logical clock indicating T now, and the sequence number s' and the value of the received clock T are forwarded on all outgoing links except the link from which the synch signal was received (line 18).

The third type of event which awakens the Time Manager is the timeout TP which occurs in response to the "TP.measure(PER)" instruction on line 25. Upon the occurrence of timeout TP, the Time Manager at the processor where the timeout occurred increments its local sequence number by one, sets the variable L to the value of the local logical clock and adjusts the logical clock such that after PER time units it will show the same time as a logical clock currently showing the value L. Finally, a synch signal is generated having the updated sequence number and the value of the local logical clock on all outgoing links (line 23).

The timeout condition becomes true if a period of more than·PER time units (as measured on the local clock) has elapsed since the last join or periodic synchronisation without receiving any new join start signal or significant "(s',T)" message (line 23). In joined state ("joined" is true), the timeout TP triggers the generation of a synch wave with a new sequence number s = s + 1 and local logical time L = C.read. If the new wave is the winning wave (i.e. in all the processors reached by it the condition T≥L is true (lines 14 and 18)), then by the end of its propagation every two non-faulty processors will have their clocks within ndel(1 + δ) time units. If the new wave is not a winning wave, then there have been several simultaneous wave propagations initiated by several independent processors. The clocks of these processors must already be less than ndel(1 + δ) time units apart, and all the processors which accept messages belonging to these waves will also set their clocks accordingly, so that in the end, all joined clocks are brought within ndel (1 + δ) from each other.

In the synchronisation method described with reference to Fig. 1 logical clocks are corrected at synchronisation intervals, so they advance discontinuously. If we want to use a logical clock C to measure how much time elapses between two successive events $e_1$ and $e_2$, this discontinuity while the measurement is in progress will introduce an error in the measurement. On the other hand, if we want to keep logical clocks synchronised, we must adjust them from time to time.

The above problem is solved by maintaining in each processor several logical clocks which run at roughly the same speed as the local hardware clock. Any new synchronisation creates a new logical clock which remains current until the next synchronisation occurs. After ceasing to be current, a clock continues to run and is used to measure the length of all time intervals that started while it was current. Assuming that TMAX is the maximum time interval length that will ever have to be measured, all logical clocks that are older than TMAX hardware clock time units can be discarded.

We define a discrete logical clock as being the result of adding a constant adjustment value to a hardware clock (we call such clocks discrete because they are advanced by discrete quantities; this is in contrast with having continuous clock adjustments, as described with reference to Fig. 3). If we term the time interval between two successive synchronisations a synchronisation epoch, then we can represent the logical clocks that were current during successive synchronisation epochs that have started at times $T_s$, s = 1,2,... by pairs - ($T_s$,$A_s$), where $A_s$ is the adjustment used for computing the current time during epoch s.

To measure the length of time elapsed between two clock times $T_a$ and $T_b$, the logical clock (i.e. adjustment) to be used would be the one that was current during the epoch to which $T_a$ belongs. The Discrete-Logical-Clock data type (line 1) uses the variable

S = {(Time $T_s$, Adjustment $A_s$)|s = 0,1,2,...}

(line 2) to denote the history function that associates the starting times $T_s$ of successive synch epochs s with the adjustments $A_s$ current during those epochs. The starting time $E(T_a)$ of the epoch that was current when a clock time $T_a$ occurred is

$E(T_a) = \max\{T \epsilon dom(S)| T \leq T_a\}$

If the maximum time interval length that has to be measured is TMAX, then only as many adjustments must be kept as elapsed· synch epochs since the epoch current at time T-TMAX. If a bound exists on the number of successive joins that can occur between two periodic synchronisations, then only a finite number of adjustment values must be memorised at any one time.

An operational specification of a Discrete-Logical-Clock abstract data type (line 1) that manages the correspondence between synch epochs and constant adjustments is given in Fig. 2. The "initialise" procedure initialises the logical time to 0 (lines 4, 5). The "adjust" procedure (lines 6,7,8) adds to the history function S the adjustment valid in the new epoch starting at time T received in a synch signal. The constant adjustment for the new epoch is equal to the adjustment valid in the previous epoch augmented by the difference in clock readings T-L (line 7). To prevent S from growing indefinitely, this procedure also deletes from the history S all information concerning past synch epochs (B, C) in S where B is beyond the TMAX delay limit to be measured (line 8). The "read" function (lines 9,10) adds to the adjustment $A_s$ of the current synch epoch the value HC of the hardware clock. If a clock error is detected, abortion of the task using the data type follows. The "duration" function (lines 11,12) computes the time duration elapsed since clock time T by using the adjustment value $A_s = S(E(T))$ associated with the synchronisation epoch current when the clock time $T_s$ occurred (lines 11, 12).

The previous implementation of logical clocks entails some run-time and storage overhead. First, the "read" and "duration" operations are fairly time-consuming (since a search in the list of past and current adjustments is required). Second, maintaining this list might require a significant amount of storage space.

. An alternative, more efficient (in terms of runtime and storage overhead), way of implementing logical clocks involves changing the logical clocks gradually instead of just bumping them by stored adjustment constants. This can be done by spreading the change over the time interval between two successive scheduled synchronisations.

In the algorithm of Fig. 3, an arbitrary logical clock C is driven by the fastest correct logical clock, say F. To achieve continuity of C, we will increase the speed of C in such a way as to ensure that by the time the next periodic resynchronisation occurs, C approaches the same time as F. For simplicity, the preferred embodiment assumes that the speed of a joined logical clock remains constant between successive synchronisation waves. This decision leads to the following expression of logical time C:

$$C(t) = HC(t) + A(t)$$

where the Adjustment function A is a linear function of the hardware clock function HC:

$$A(t) = N + m \times HC(t).$$

If T-L is the difference between the value T of a fast clock F read from a synch signal and the reading L of the local logical clock C when a winning synchronisation wave is received, and if the goal is that C should approach the same time as F after PER time units (assuming C and F have close to the same speed) then a linear interpolation leads to the following expression of the new values of the parameters N and m computed after each resynchronisation:

$$m = (T\text{-}L) / PER; \quad N = L\text{-}(1+m) \times HC.$$

In Fig. 3, the specification of the Continuous-Logical-Clock data type (line 1) is given. The data type shown in Fig. 3 defines the variables N and m of type time and real-number, respectively (line 2). The data type performs the operations listed below line 3.

The "initialise" procedure (line 4) sets the value of N to -HC and the value of m to 0.

The procedure "adjust (L,T:time)" (line 6) sets m equal to (T-L)/PER and N to L-(1+m)×HC when the variable "joined" is true. If joined is not true, then N is set to T-HC. The variable L indicates the local logical clock and the variable T indicates the clock value received in the synch signal as discussed above with reference to Fig. 1.

The function "read" returns the time of the continuous logical clock data type which is equal to HC+N+m×HC. However, if a clock error occurs, then the function aborts (line 9).

The function "duration (T:time)" returns a time which is equal to HC+N+m×HC-T. If a clock error occurs during this function, then the function aborts (line 11).

The implementation of the Continuous-Logical-Clock data type is shown in Fig. 3. As discussed above, it provides a simple linear interpolation which leads to the gradual adjustment of the local logical clock so that it approaches a preferred clock value toward the end of adjustment interval PER.

As described above, the present invention provides a method for maintaining logical clocks at each correctly functioning processor in a distributed processing system that is simple to implement and robust in the presence of faults which, as a practical matter, are likely to occur in such distributed systems. The method is particularly useful in the closely coupled, high end processor environment where processor clocks have error checking circuitry which cause error signals to be generated in response to clock failures.

Preferred embodiments of the present invention have been described above and those skilled in the art will recognise that variations and modifications to the embodiments described can be made to accommodate the needs of a particular distributed processing system.

## Claims

1. A method for synchronising a plurality of local clocks in a distributed processor system comprising the steps of:
diffusing a synch signal indicating a preferred clock value among processors in the system; and
correcting local clock values at the processors in the system in response to the synch signal, such that the difference between local clock values for every pair of processors in the system is bounded.

2. A method according to claim 1 comprising the steps of:
generating a start signal indicating that synchronisation is desired;
responsive to the start signal, causing at least one processor in the system to send a synch signal indicating the value of its local clock to other processors in the system;
at processors in the system receiving a synch signal from a sending processor, comparing the clock value indicated in the synch signal to the value of the local clock in the receiving processor to determine a preferred clock value; and
if a clock value indicated in the synch signal is the preferred clock value, then correcting the local clock at the receiving processor and sending the synch signal to other processors in the system excluding the sending processor;
if the clock value of the local clock in the receiving processor is the preferred clock value, then generating a new synch signal indicating the clock value of the local clock at the receiving processor and sending the new synch signal to other processors in the system including the sending processor.

3. A method according to claim 1 in which the difference between local clock values for every pair of processors in the system is bounded by a function of the communication delays in the system, said method comprising the steps of:

generating a start signal indicating that synchronisation is desired;

responsive to the start signal, causing at least one processor in the system to send a synch signal indicating the value of its local clock and a new synchronisation sequence indicator to other processors in the system;

maintaining a synchronisation sequence indicator at the processors in the system that identifies the most recently processed synch signal at the respective processor;

at processors in the system receiving a synch signal, comparing the synchronisation sequence indicator stored at the processor with the new synchronisation sequence indicator received in the synch signal to determine whether the new synchronisation sequence has been earlier processed by the receiving processor;

at processors in the system receiving a synch signal from a sending processor for a synchronisation sequence yet to be processed at the receiving processor, comparing the clock value indicated in the synch signal to the value of the local clock in the receiving processor to determine a preferred clock value; and

if a clock value indicated in the synch signal is the preferred value, then correcting the local clock at the receiving processor and sending the synch signal to other processors in the system excluding the sending processor;

if the value of the local clock in the receiving processor is the preferred clock value, then generating a new synch signal indicating the value of the local clock at the receiving processor having a new synchronisation sequence indicator and sending the new synch signal to other processors in the system including the sending processor.

4. A method according to claim 3, further including the steps of:

at processors in the system receiving a synch signal indicating a new synchronisation sequence that is the same as the synchronisation sequence most recently processed by the receiving processor, comparing the clock value indicated in the synch signal to the value of the local clock in the receiving processor to determine a preferred clock value; and

if the clock value indicated in the synch signal is the preferred clock value, then correcting the local clock at the receiving processor and sending the synch signal to other processors in the system excluding the sending processor;

if the value of the local clock in the receiving processor is the preferred clock value, then ignoring the synch signal.

5. A method according to claim 4, further including the step of:

at processors in the system receiving a synch signal from a sending processor wherein the synchronisation sequence indicator at the receiving processor is more recent than the new synchronisation sequence indicated in the synch signal, then ignoring the synch signal.

6. A method according to any one of claims 2 to 5, wherein the step of generating a start signal includes:

measuring elapsed time from the reception of a recent synch signal in at least one processor in the system; and

if the measured elapsed time exceeds a selected value, then causing the processor to generate the start signal.

7. A method according to any one of claims 2 to 5, wherein a new processor joins the system when connected by at least one communication link to at least one processor in the system, and wherein said step of generating a start signal includes:

causing the new processor to generate the start signal upon joining the system; and

sending the start signal from the new processor to at least one other processor in the system.

8. A method according to any one of the preceding claims, further including:

defining the value of the local clock as the sum of a discrete adjustment value and a local hardware clock value; and

said step of correcting local clocks includes the step responsive to the synch signal of generating the discrete adjustment value.

9. A method according to claim 8, further including the step of:

maintaining a history function indicating the adjustment values associated with past synchronisation sequences.

10. A method according to any one of claims 1 to 7, further including:

defining the value of the local clock as a function of a local hardware clock value having at least one adjustment parameter; and

said step of adjusting the local clock includes the step responsive to the synch signal of altering at least one adjustment parameter of the function to gradually adjust the local clock value.

11. A distributed processor system which operates in accordance with a method as claimed in any one of the preceding claims.

```
task Time-Manager ::=

var L,T:Time; C:Logical-Clock; TP,TJ:Timer;
    s,s': Natural-Number; joined:Boolean; l:link;

s←0; C.initialize; joined← false;
send-all("new"); TJ.measure(2×NDEL);

cycle
 select
   receive("new",l)  →  s←s+1; send-all(s,C.read);
   □
   receive(s',T,l)    → L←C.read;
            if
               (s'<s)∨(s'=s&T≤L)  →  loop;
              □
               (s'=s)&(T>L)  →  C.adjust(L,T); forward((s,T),l);
              □
               (s'>s)&(T<L)  →  s←s'; send-all(s,L);
              □
               (s'>s)&(T≥L)  →  s←s'; C.adjust(L,T); forward((s,T),l);
            fi;
   □
   Timeout TJ       →    joined←true;
   □
   Timeout TP       →    s←s+1; L←C.read; C.adjust(L,L); send-all(s,L);
 endselect;
 TP.measure(PER);

endcycle;
```

# FIG. 1

```
data type Discrete-Logical-Clock ::=

var S∈ Time → Adjustment;

operations

procedure initialize;
  S← {(0;HC)};

procedure adjust(L,T:Time);
  S← S∪{(T,S(max(dom(S)))+(T-L))};
  S← S\{(B,C)∈S|B<E(L-TMAX)};

function read returns Time;
  HC+S(max(dom(S)))[clock-error: ▷ abort];

function duration(T:Time) returns Time;
  HC+S(E(T))-T[clock-error: ▷ abort];
```

# FIG. 2

```
data type Continuous-Logical-Clock ::=

var (N,m): Time × Real-Number;

operations

procedure initialize;
  N← -HC; m←0;

procedure adjust(L,T:Time);
  if joined then m←(T-L)/PER; N←L-(1+m)×HC else N←T-HC;

function read returns Time;
  HC+N+m×HC[clock-error: ▷ abort];

function duration(T:Time) returns Time;
  HC+N+m×HC - T[clock-error: ▷ abort];
```

# FIG. 3